# EUROPÄISCHE PATENTANMELDUNG

(11) **EP 2 090 638 A1**
(43) Veröffentlichungstag der Anmeldung: **19.08.2009**
(21) Anmeldenummer: 08101506.7
(22) Anmeldetag: 12.02.2008
(51) Int. Cl.: C09K 11/59

(54) **Lumineszierende Silicium-Nanopartikel**

(71) Anmelder: Evonik Degussa GmbH, 45128 Essen (DE)
(72) Erfinder: Ebbers, André, 44793 Bochum (DE); Stützel, Bernhard, 45770 Marl (DE); Klingebiel, Uwe, 37124 Rosdorf (DE); Klingbeil, Christian, 37077 Göttingen (DE)

(57) **Zusammenfassung**

Die vorliegende Erfindung betrifft ein Verfahren zur Herstellung einer Zusammensetzung enthaltend lumineszierende modifizierte Siliciumpartikel ausgehend von nanoskaligen Siliciumpartikeln, welche vorwiegend aus Heißwand- oder Mikrowellenreaktoren gewonnen wurden. Weiterer Gegenstand der Erfindung sind lumineszierende modifizierte Siliciumpartikel und Zusammensetzungen enthaltend solche Partikel sowie die Verwendung derartiger Partikel und Zusammensetzungen.

## Beschreibung

Gegenstand der Erfindung ist ein Verfahren zur Herstellung einer Zusammensetzung enthaltend lumineszierende modifizierte Siliciumpartikel ausgehend von nanoskaligen Siliciumpartikeln, welche vorwiegend aus Heißwand- oder Mikrowellenreaktoren gewonnen wurden. Weiterer Gegenstand der Erfindung sind lumineszierende modifizierte Siliciumpartikel und Zusammensetzungen enthaltend solche Partikel sowie die Verwendung derartiger Partikel und Zusammensetzungen.

Die chemische Modifizierung von Siliciumoberflächen, insbesondere von Wafer-Oberflächen, war und ist Gegenstand zahlreicher Untersuchungen. In der Halbleiterindustrie sind modifizierte Silicium-Wafer bzw. ist modifiziertes Silicium im Allgemeinen nach wie vor ein Gegenstand großen Interesses. Bekannt ist z. B., dass Silicium-Wafer-Oberflächen durch Hydrosilylierung von Alkenen bzw. Alkinen chemisch modifiziert werden können. Die Hydrosilylierung kann dabei radikalisch oder übergangsmetallkatalytisch initiiert werden. Auch thermisch und photoinduzierte Hydrosilylierungen an Wafer-Oberflächen sind bekannt. Eine Übersicht über die Organometallchemie von Siliciumoberflächen liefert Chemical Reviews, 2002, Vol. 102, Nr. 5, S. 1271-1308.

In jüngster Zeit gelang es, die an Silicium-Wafer-Oberflächen bekannte Hydrosilylierung auch auf Silicium-Nanopartikel zu übertragen. So beschreiben J. Nelles et al. in Colloid Polymer Science (2007) 285, 729-736, die Funktionalisierung von Silicium-Nanopartikeln durch Hydrosilylierung mit 1-Alkenen. Im Journal of Nanoscience and Nanotechnology, Vol. 7, 1-5, 2007, beschreiben die gleichen Autoren die Oberflächenchemie von n-octan-modifizierten Silicium-Nanopartikeln sowie deren Analyse mittels IR, ¹³C-CPMAS-NMR, EELS und TGA.

J. Nelles et al. verwendeten Silicium-Nanopartikel, die durch Pyrolyse von mit Argongas gemischten Silanen in einem Heißwandreaktor erhalten wurden. Alternativ können solche Silicium-Nanopartikel auch in einem Mikrowellenreaktorverfahren gewonnen werden. Verfahren zur Herstellung derartiger Heißwandreaktor- und Mikrowellenreaktor-Siliciumpartikel bzw. -pulver, werden für HWR-Siliciumpulver z. B. in der DE 103 53 995 A1 und für MWR-Siliciumpulver z. B. in der DE 103 53 996 A1 beschrieben.

Im Stand der Technik sind auch einige Verfahren beschrieben, nach denen lumineszierende Materialien auf Siliciumbasis erhalten werden können. So wird in der US 6,236,060 eine lichtemittierende Schichtstruktur offenbart, in der Nanokristalle aus z. B. Silicium eingearbeitet sind. In der US 5,962,863 wird eine filmartige Nanostruktur aus einkristallinem Silicium beschrieben, die auf einem isolierenden Substrat aufgetragen und nach Einbau in eine entsprechende Vorrichtung geeignet ist, Licht zu emittieren. Die US 6,027,666 beschreibt mesoporöses Siliciumdioxidmaterial, welches in seinen Poren stabilisierte Cluster von Siliciumatomen enthält und photolumineszierende Eigenschaften aufweist.

Bei der Oberflächenmodifizierung von Siliciumwafern wird in der Regel sogenanntes poröses Silicium verwendet. Als "poröses Silicium" (PS) bezeichnet man Silicium-Einkristalle (in Form von Wafern), die nach Ätzung in Flusssäure eine poröse, nanokristalline Oberfläche aufweisen. Da im Rahmen der vorliegenden Erfindung ein Pulveranalogon des PS verwendet wird, wird an dieser Stelle auf die Darstellung, ausgewählte Eigenschaften und Anwendungen von PS eingegangen.

PS lässt sich durch nasschemisches oder photochemisches Ätzen darstellen, wird aber üblicherweise durch elektrochemisches Ätzen in wässriger Flusssäure dargestellt. Dabei dient der Siliciumwafer als Anode, die Kathode besteht aus Platin oder einem anderen HF-resistenten Material. Nach Reinigung des Wafers wird dieser typischerweise in einer 1-50%igen wässrigen Fluorwasserstofflösung unter Beimischung von Ethanol zur Absenkung der Oberflächenspannung für wenige Minuten bei etwa 7-80 mA/cm² angeätzt. Dieser Prozess liefert eine poröse, nanokristalline, H-terminierte Oberfläche. Die Polarität der Si-H-Bindung führt zu hydridischem Wasserstoff.

Der genaue Ablauf dieser Reaktion ist noch nicht vollständig verstanden. Es wird jedoch angenommen, dass die Reaktion in etwa nach folgendem Mechanismus abläuft:

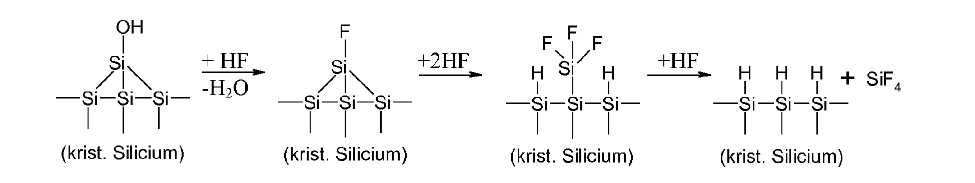

Die Eigenschaften von PS weichen signifikant von denen reinen Siliciums ab. Sie hängen von der Porosität, Nanooberflächenstruktur und dem Oxidations- bzw. Modifikationsgrad des Materials ab. Dies führt zu einem Material mit abhängig von der Struktur fein einstellbaren Eigenschaften.

Eine der hervorstechendsten Eigenschaften des PS ist seine Lumineszenz. Die sichtbare Photolumineszenz ist Gegenstand einer Vielzahl von Publikationen. Man unterscheidet S-Band-Lumineszenzen, deren Wellenlänge (damit Farbe) sich vom nahen Infrarot- bis zum Violettbereich je nach Oberflächenstruktur oder - modifikation einstellen lässt, von F-Band-Lumineszenz, die blaue Emission zur Folge hat. Letztere findet man (am Wafer) nur bei sauerstoffhaltigem Material. Alle drei Primärfarben (blau, grün und rot) sind als Emission von PS beobachtet worden, damit zeigt nanokristallines PS die für Displayanwendungen nötigen Eigenschaften.

Poröses Silicium besitzt ein breites Anwendungsspektrum. Im Bereich der Mikroelektronik wird bereits seit 1969 die Isolationsfähigkeit von oxidiertem PS genutzt. Im Bereich der Optik können z.B. Interferenzfilter realisiert werden. Für den Bereich der Optoelektronik ist PS durch seine Photo- und Elektrolumineszenz ein besonders interessanter Stoff. Alle Elemente eines optoelektronisch integrierten Schaltkreises (OIEC) wurden durch PS bereits realisiert, und auch wenn die großindustrielle Produktion noch vor Problemen steht, werden in optoelektronische Systeme für die Zukunft der Datenverarbeitung große Hoffnungen gesetzt. Darüber hinaus besitzt PS noch weitgehend unerforschtes Potential für die Sensorik und die Biomedizinische Anwendung. Für die Herstellung von Solarzellen kommt PS nicht nur aufgrund der elektrischen Isolation, sondern auch als anti-reflektive Bedeckung und zur Darstellung hochreiner dünner Si-Schichten zur Anwendung.

Probleme bei der Anwendung ergeben sich aus der Instabilität des üblichen PS-Interfaces, der Si-H-Schicht. Zwar kann ein frisch hergestellter PS-Wafer einige Minuten lang an Luft bestehen, dann jedoch wandelt sich die Si-H-Schicht quantitativ in eine polymere Si-O-Schicht um, welche die meisten der Eigenschaften von PS verliert. Demzufolge steht bei vielen Arbeiten die kovalente Modifikation von PS im Vordergrund, um PS zu schützen und seine Eigenschaften gegen Oxidation abzuschirmen.

Nicht bekannt im Stand der Technik sind nanoskalige Partikel auf Siliciumbasis, die lumineszierende Eigenschaften aufweisen und darüber hinaus in Lösungsmitteln, gegebenenfalls kolloidal, löslich sind.

Aufgabe der vorliegenden Erfindung war es daher, ein einfaches und kostengünstiges Verfahren bereitzustellen, mit dem kolloidal lösliche lumineszierende Verbindungen auf Siliciumpartikelbasis oder Zusammensetzungen enthaltend solche Partikel hergestellt werden können.

Überraschend wurde nun gefunden, dass diese Aufgabe durch ein Verfahren zur Herstellung einer Zusammensetzung enthaltend lumineszierende modifizierte Siliciumpartikel gelöst werden kann, wenn das Verfahren die Schritte umfasst:
a) Bereitstellen von nanoskaligen Siliciumpartikeln,
b) optional, Vorbehandlung der nanoskaligen Siliciumpartikel mit Sauerstoff,
c) Herstellen einer Reaktionsmischung durch Zugabe von zumindest Fluorwasserstoff mit einem Wassergehalt von unter 40 Gew.-% und mindestens einer hydrosilylierbaren Verbindung zu den nanoskaligen Siliciumpartikel, wobei die Zugabe der hydrosilylierbaren Verbindung
   i) gleichzeitig mit der Zugabe des Fluorwasserstoffs erfolgt, und/oder
   ii) nach der Zugabe des Fluorwasserstoffs erfolgt, wobei optional zwischen den beiden Zugabeschritten überschüssiger Fluorwasserstoff und/oder entstandene Fluorsilane zumindest zum Teil entfernt werden, und
d) optional, Aufkonzentrierung oder Isolierung der in Schritt c) erhaltenen lumineszierenden modifizierten Siliciumpartikel.

In einer bevorzugten Ausführungsform der Erfindung werden als nanoskalige Silliciumpartikel Siliciumpulver aus aggregierten kristallinen HWR- oder MWR-Siliciumpartikeln verwendet. Die HWR- oder MWR-Siliciumpulver werden dabei in einem Heißwandreaktor- bzw. einem Mikrowellenreaktorverfahren gewonnen. Die Darstellung dieser hochreinen Siliciumpulver ist dem Fachmann bekannt und wird für HWR-Siliciumpulver z.B. in der DE 10353995 A1 und für MWR-Siliciumpulver z.B. in der DE 10353996 A1 beschrieben.

Im Falle der Verwendung eines Siliciumpulvers aus aggregierten kristallinen HWR-Siliciumpartikeln weist dieses vorzugsweise eine BET-Oberfläche im Bereich zwischen 20 bis 150 m²/g, weiter bevorzugt zwischen 40 und 120 m²/g, auf.

Im Falle der Verwendung eines Siliciumpulvers aus aggregierten kristallinen MWR-Siliciumpartikeln weist dieses vorzugsweise eine BET-Oberfläche von mehr als 50 m²/g, bevorzugt im Bereich zwischen 100 bis 700 m²/g, auf.

Unter "aggregiert" ist zu verstehen, dass sphärische oder weitestgehend sphärische Primärpartikel, wie sie zunächst in der Reaktion gebildet werden, im weiteren Reaktionsverlauf zu Aggregaten zusammenwachsen. Der Verwachsungsgrad der Aggregate kann durch die Prozessparameter beeinflusst werden. Diese Aggregate können im weiteren Reaktionsverlauf Agglomerate bilden. Im Gegensatz zu den Aggregaten, die sich in der Regel nicht oder nur teilweise in die Primärpartikel zerlegen lassen, bilden die Agglomerate eine nur lose Zusammenballung von Aggregaten, die leicht in die Aggregate zerfallen können.

Unter "kristallin" ist zu verstehen, dass wenigstens 90% des Pulvers kristallin ist. Ein solcher Anteil an Kristallinität kann durch Vergleich der Intensitäten der [111], [220] und [311] Signale des erfindungsgemässen Pulvers mit einem Siliciumpulver bekannter Kristallinität und Kristallitgrösse ermittelt. Bevorzugt im Sinne der Erfindung ist ein Siliciumpulver mit wenigstens 95%, besonders bevorzugt ein solches mit wenigstens 98% kristallinem Anteil. Zur Ermittlung dieser Kristallisationsgrade eignet sich die Auswertung von TEM-Aufnahmen und Auszählung der Primärpartikel, welche Gitternetzlinien als Merkmal des kristallinen Zustandes aufweisen.

Weiterhin kann das erfindungsgemäss verwendete Siliciumpulver dotiert sein, insbesondere bei Verwendung als Halbleiter in elektronischen oder optoelektronischen Bauteilen. Bevorzugte Dotierkomponenten sind die Elemente Phosphor, Arsen, Antimon, Bismut, Bor, Aluminium, Gallium, Indium, Thallium, Europium, Erbium, Cer, Praseodym, Neodym, Samarium, Gadolinium, Terbium, Dysprosium, Holmium, Thulium, Ytterbium, und/oder Lutetium. Der Anteil dieser kann im erfindungsgemässen Siliciumpulver bis zu 1 Gew.-% betragen. In der Regel wird ein Siliciumpulver erwünscht sein, bei dem die Dotierkomponente im ppm oder gar ppb-Bereich enthalten ist. Bevorzugt ist ein Bereich von 10¹³ bis 10¹⁵ Atome Dotierkomponente/cm³.

Weiterhin ist es möglich, dass das erfindungsgemäss verwendete Siliciumpulver Lithium als Dotierkomponente aufweist. Der Anteil des Lithiums im Siliciumpulver kann bis zu 53 Gew.-% betragen. Besonders bevorzugt können Siliciumpulver mit bis zu 20 bis 40 Gew.-% Lithium sein.

Ebenso kann das erfindungsgemäss verwendete Siliciumpulver Germanium als Dotierkomponente aufweisen. Dabei kann der Anteil des Germaniums bis zu 40 Gew.-% betragen. Besonders bevorzugt können Siliciumpulver von 10 bis 30 Gew.-% Germanium sein.

Schliesslich können auch die Elemente Eisen, Ruthenium, Osmium, Kobalt, Rhodium, Iridium, Nickel, Palladium, Platin, Kupfer, Silber, Gold, Zink Dotierkomponente des Siliciumpulvers sein. Ihr Anteil kann bis zu 5 Gew.-% des Siliciumpulvers betragen.

Die Dotierkomponente kann dabei homogen im Pulver verteilt sein, oder in der Schale oder im Kern der Primärpartikel angereichert sein oder interkaliert werden. Bevorzugt können die Dotierkomponenten auf Gitterplätzen des Siliciums eingebaut werden. Dies ist im wesentlichen von der Art des Dotierstoffes und der Reaktionsführung abhängig.

Unter Dotierkomponente im Sinne der Erfindung ist das im erfindungsgemäss verwendeten Pulver vorliegende Element zu verstehen. Unter Dotierstoff ist die Verbindung zu verstehen, die im Verfahren eingesetzt wird, um die Dotierkomponente zu erhalten.

Das erfindungsgemäss verwendete Siliciumpulver kann weiterhin eine Wasserstoffbeladung von bis zu 10 Mol-% aufweisen, wobei ein Bereich von 1 bis 5 Mol-% besonders bevorzugt ist. Geeignet zur Bestimmung sind NMRspektroskopische Methoden, wie beispielsweise ¹H-MAS-NMR-Spektroskopie oder IR-Spektroskopie.

Die nanoskaligen Siliciumpartikel, insbesondere die oben beschriebenen Siliciumpulver, können dabei auch in Form einer Dispersion in einem Lösungsmittel bereitgestellt werden. Als Lösungsmittel eignen sich Alkohole, insbesondere Alkanole wie Methanol, Isopropanol oder Butanol; Ether, insbesondere THF, Diethylether oder Ethylmethylether; oder Ketone, z.B.Aceton. Ein bevorzugtes Dispergiermittel ist Ethanol. Geeignet ist z.B. eine 10 bis 50 Gew.-%ige Dispersion von HWR- oder MWR-Siliciumpulver in Ethanol.

In einer bevorzugten Ausführungsform der Erfindung, insbesondere bei Verwendung von HWR- Siliciumpartikeln, werden die bereitgestellten nanoskaligen Siliciumpartikel anschließend, mit Sauerstoff vorbehandelt. Dabei erfolgt die Vorbehandlung in der Regel mit Luft, Sauerstoff oder getrocknetem Sauerstoff. Bei der Vorbehandlung werden die Siliciumpartikel also z.B. in einen Exsikator eingebracht, der Exsikator wird evakuiert bis vorzugsweise unter 20 mBar und anschließend wird reiner, über P₄O₁₀ getrockneter Sauerstoff eingelassen. Überraschenderweise wurde gefunden, dass mit den so vorbehandelten Siliciumpartikeln eine bessere Umsatzrate bei der anschließenden Umsetzung mit dem Fluorwasserstoff und bei der Hydrosilylierungsreaktion erzielt werden kann. So findet man im IR-Spektrum des Bodensatzes der lumineszierenden modifizierten Siliciumpartikel ein größeres Integralverhältnis der SiH/SiO- und der SiC/SiO-Banden als wenn von nicht mir Sauerstoff vorbehandelten Siliciumpartikeln ausgegangen wird. Um jedoch durch das erfindungsgemäße Verfahren lumineszierende modifizierte Siliciumpartikel zu erhalten, ist eine Sauerstoffvorbehandlung jedoch nicht zwingend erforderlich.

Die bereitgestellten und gegebenenfalls mit Sauerstoff vorbehandelten nanoskaligen Siliciumpartikel werden anschließend mit dem Fluorwasserstoff und mindestens einer hydrosilylierbaren Verbindung behandelt.

Dabei ist wichtig, dass die Behandlung der nanoskaligen Siliciumpartikel mit Fluorwasserstoff mit einem Wassergehalt von unter 40 Gew.-% und nicht mit Flusssäure mit höherem Wassergehalt durchgeführt wird, wie dies üblicherweise bei der Darstellung "porösen Siliciums" der Fall ist. Bevorzugt weist der Fluorwasserstoff einen Wassergehalt von unter 20 Gew.-%, weiter bevorzugt von unter 10 Gew.-%, noch weiter bevorzugt von unter 5 Gew.-%, und noch weiter bevorzugt von unter 1 Gew.-% auf. Am meisten bevorzugt wird wasserfreier Fluorwasserstoff verwendet. Dabei bedeutet "wasserfrei" ein H₂O-Gehalt von unter 1000 ppm, vorzugsweise unter 100 ppm.

Als poröses Silicium bezeichnet man Silicumreinkristalle in Form von Wafern die nach Ätzung in wässriger Flusssäure eine poröse, nanokristalline Oberfläche aufweisen. Durch die Behandlung mit Flusssäure findet eine Reduktion der Siliciumoxidschicht auf der Siliciumwaferoberfläche statt, wobei eine SiHterminierte, poröse nanokristalline Waferoberfläche erhalten wird. Überraschend wurde nun jedoch gefunden, dass bei Verwendung von Fluorwasserstoff mit niedrigerem Wassergehalt eine ausreichende Reduktion der Siliziumoxidoberfläche und somit eine ausreichende SiH-Oberfächenterminierung erzielt werden kann, möglicherweise verbunden mit dem Freiätzen von Partikelbereichen kleiner Dimension, so dass die Herstellung der erfindungsgemäßen Zusammensetzung enthaltend lumineszierende modifizierte Siliciumpartikel möglich wird.

Die im erfindungsgemäßen Verfahren vorgesehene Hydrosilylierung erfolgt vorzugsweise gleichzeitig mit der Behandlung der nanoskaligen Siliciumpartikel mit dem Fluorwasserstoff. Dazu wird durch Zugabe zumindest von Fluorwasserstoff und mindestens einer hydrosilylierbaren Verbindung, vorzugsweise unter Kühlung mit flüssiger Luft oder flüssigem Stickstoff, zu den nanoskaligen Siliciumpartikel eine Reaktionsmischung hergestellt.

In einer alternativen Ausführungsform der Erfindung kann die Zugabe der hydrosilylierbaren Verbindung auch nach der Zugabe des Fluorwasserstoffs erfolgen. Dabei kann optional zwischen den beiden Zugabeschritten überschüssiger Fluorwasserstoff und/oder entstandene Fluorsilane zumindest zum Teil entfernt werden. Vorteilhaft ist allerdings, den Fluorwasserstoff nicht zu entfernen, da dann in der Regel höhere Ausbeuten erzielt werden.

In einer bevorzugten Ausführungsform der Erfindung wird die hydrosilylierbare Verbindung ausgewählt aus der Gruppe, die Alkene und Alkine umfasst. Besonders bevorzugt ist, wenn die hydrosilylierbare Verbindung ein einfach oder mehrfach ungesättigtes C₆-C₁₂-Alken oder -Alkin ist und vorzugsweise zumindest eine endständige Mehrfachbindung aufweist. Geeignte hydrosilylierbare Verbindung können insbesondere ausgewählt werden aus der Gruppe, die 1-Octen, Cyclohexen, 1-Hexen, 1-Decen, 1-Undecen umfasst.

In einer bevorzugten Ausführungsform der Erfindung wird die Hydrosilylierung in Schritt c) thermisch induziert. Dazu wird die Reaktionsmischung vorzugsweise auf eine Temperatur von über 100 °C erwärmt, bevorzugter auf eine Temperatur im Bereich von 120 bis 240 °C, am meisten bevorzugt auf eine Temperatur im Bereich von 140 bis 200 °C.

Die in Schritt c) oder d) erfindungsgemäß erhaltene Zusammensetzung oder die isolierten lumineszierenden modifizierten Siliciumpartikel können gegebenenfalls in einem organischen Lösungsmittel kolloidal gelöst werden. Geeignete Lösungsmittel sind unpolare aprotische Lösungsmittel, z.B. n-Pentan, n-Hexan oder n-Octan, oder Mischungen solcher unpolaren aprotischen Lösungsmittel. Die so kolloidal gelösten modifizierten Siliciumpartikel behalten dabei ihre Lumineszenz.

Lumineszierende modifizierte Siliciumpartikel oder entsprechende Zusammensetzungen enthaltend solche Partikel, vorzugsweise hergestellt nach dem oben beschriebenen Verfahren, eignen sich für die Verwendung in Leuchtdioden, Lumineszenzlampen, Lumineszenzfolien, Displays, als oder in Lumineszenzfarbstoffen, Biomarkern, Farbstoffen für die Fluoreszenzmikroskopie, in Feldeffekttransistoren und als Identifikationsmerkmal in der Dokumentensicherheit.

### Beispiele:

### Experimenteller Aufbau

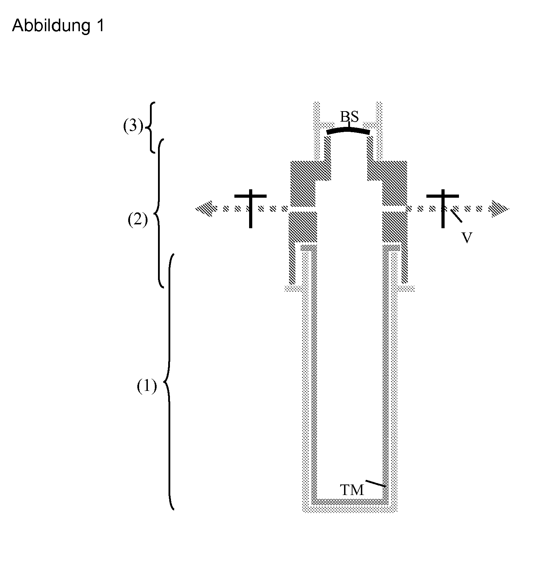

Die Empfindlichkeit von porösem Silicium gegen Sauerstoff und die pyrophoren Eigenschaften von MWR-Material erfordert, dass Arbeiten damit unter Schutzgas erfolgen müssen. Die nanokristallinen Edukte wurden daher ausschließlich in einer Glovebox gelagert und von dort entnommen. Silicium verbrennt bei höheren Temperaturen nicht mehr mit Sauerstoff, sondern mit Stickstoff. Die große Oberfläche des Materials läßt daher eine Reaktion mit Stickstoff vermuten, so dass als Schutzgas Argon der Reinheit 5.0 verwendet wurde. Die Arbeit mit hochkonzentrierter Flusssäure und erst recht mit wasserfreiem Fluorwasserstoff stellt besondere Anforderungen an den Versuchsaufbau. Die Umsetzungen der HWR- und MWR-Siliciumpulver zu porösen Silicium-Partikeln erfolgten in einem Edelstahlautoklaven, siehe Abbildung 1.

Der Autoklav besteht aus drei Edelstahlelementen, die über Gewinde miteinander verschraubt werden. (1) ist der Reaktionsraum, ausgekleidet mit einem herausnehmbaren Teflonmantel (TM). (2) dichtet den Teflonmatel durch Verschraubung ab und erlaubt durch zwei Edelstahlnadelventile (V) Zufuhr und Abfuhr von Reagenzien. Die Abdichtung nach oben gewährleistet die Berstdruckscheibe (BS), die durch (3) gegen Teflondichtungen verschraubt wird. Der Autoklav erlaubt Überdruckbedingungen bis 300 bar (Belastungsgrenze Berstdruckscheibe) und ist durch die Kombination von Edelstahl und Teflon sowohl chemisch gegen HF als auch gegen physikalische Beanspruchung (hohe Temperaturen bei gleichzeitigem Vakuum) resistent.

### Analysemethoden

IR-Spektren wurden an KBr-Presslingen auf einem BioRad FTS-7 Spektrometer an trockener Luft bei Wellenlängen von 4000-300 cm⁻¹ aufgenommen.

Auf sichtbare UV-Lumineszenz wurde durch Bestrahlung mit einer "Original Hanau Fluotest"- Handlampe geprüft.

TEM-Proben wurden auf Cu/C-Netze aufgebracht und im Vakuumexsikkator getrocknet. Die Aufnahmen erfolgten im Institut für Materialphysik der Georg-August-Universität Göttingen auf einem Philips EM 420 ST (LaB₆-Kathode, Beschleunigungsspannung 120kV, Auflösung 3,4Å).

### Edukte

Zwei Arten kristallinen Siliciums wurden eingesetzt: HWR-Material in Form eines braunen Pulvers mit einer Korngröße von 0,5 bis 1,5 mm sowie MWR-Material in Form eines gelbbraunen staubartigen Pulvers mit einer Korngröße von kleiner 0,5 mm.

### Beispiel 1

Auf 0,5 g für 2 Wochen in einer Sauerstoffatmosphäre voroxidiertem Heißwandreaktor-Siliciumpulver wurde in einem mit Teflon ausgekleidetem Edelstahlautoklaven unter Kühlung mit flüssigem Stickstoff 1,2 g wasserfreier Fluorwasserstoff kondensiert und für 17,5 h bei 100°C gerührt. Anschließend wurde das Gemisch mit flüssigem Stickstoff gekühlt und 65 g 1-Octen zugegeben. Das Gemisch wurde für 48 h Stunden bei 180°C gerührt. Nach destillativer Abtrennung des Fluorwasserstoffs wurde das Gemisch fünf Minuten bei 3500 Umdrehungen/Minute zentrifugiert. Die so erhaltene gelbe, klare organische Phase zeigte bei Bestrahlung mit einer UV-Handlampe rote Lumineszenz. Nach destillativer Abtrennung des 1-Octens verblieben 1,5 g einer orangegelben, hochviskosen Flüssigkeit.

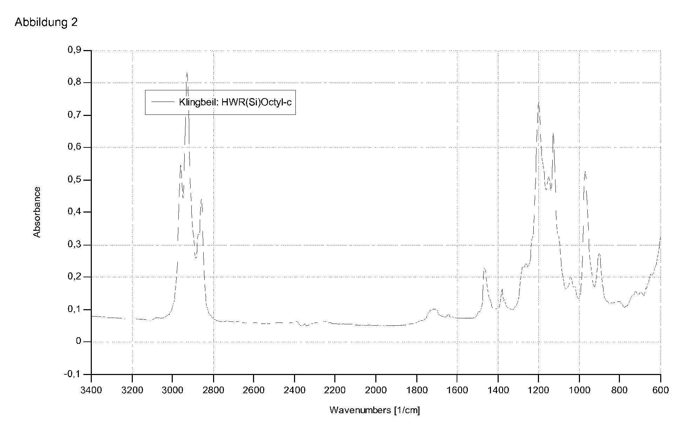

Abbildung 2 zeigt das IR-Spektrum der erhaltenen orangegelben, hochviskosen Flüssigkeit.

### Beispiel 2

Auf 1 g für 2 Wochen in einer Sauerstoffatmosphäre voroxidiertem Heißwandreaktor-Siliciumpulver wurde in einem mit Teflon ausgekleidetem Edelstahlautoklaven unter Kühlung mit flüssigem Stickstoff 2,3 g wasserfreier Fluorwasserstoff kondensiert und für 17,5 h bei 100°C gerührt. Anschließend wurde das Gemisch mit flüssigem Stickstoff gekühlt und 75 g 1-Hexen zugegeben. Das Gemisch wurde für 48 h Stunden bei 180°C gerührt. Nach destillativer Abtrennung des Fluorwasserstoffs wurde das Gemisch fünf Minuten bei 3500 Umdrehungen/Minute zentrifugiert. Die so erhaltene gelbe, klare organische Phase zeigte bei Bestrahlung mit einer UV-Handlampe blaue Lumineszenz. Nach destillativer Abtrennung des 1-Hexens verblieben 1,4 g einer orangegelben, hochviskosen Flüssigkeit.

Die nach Zentrifugation erhaltene flüssige Phase wurde für TEM-Aufnahmen präpariert, also auf TEM-Netzchen aufgetropft und anschließend an Luft getrocknet.

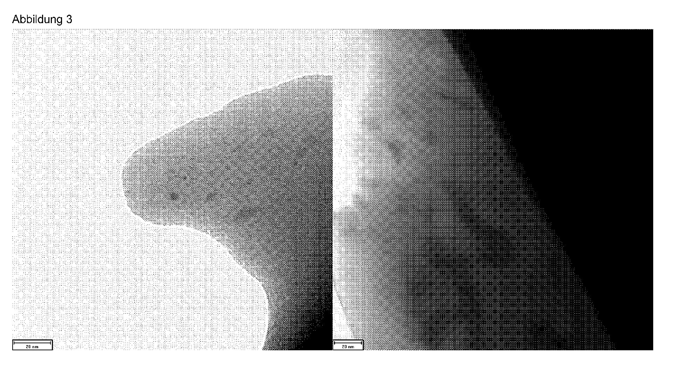

Abbildung 3 zeigt zwei entsprechende TEM-Aufnahmen. Man erkennt in den grauen Bereichen (getrocknete ölige Phase) dunklere Strukturen von rundlicher bis unregelmäßiger, zum Teil länglicher Form. Diese dunklen Strukturen werden von Agglomeraten modifizierter Siliciumpartikel gebildet. Der gezeigte Massstab ist jeweils 20 nm lang.

### Beispiel 3

Auf 1 g für 2 Wochen in einer Sauerstoffatmosphäre voroxidiertem Heißwandreaktor-Siliciumpulver wurde in einem mit Teflon ausgekleidetem Edelstahlautoklaven unter Kühlung mit flüssigem Stickstoff 0,7 g wasserfreier Fluorwasserstoff kondensiert und für 23 h bei 100°C gerührt. Anschließend wurde das Gemisch mit flüssigem Stickstoff gekühlt und 50 g 1-Decen zugegeben. Das Gemisch wurde für 48 h Stunden bei 180°C gerührt. Nach destillativer Abtrennung des Fluorwasserstoffs wurde das Gemisch fünf Minuten bei 3500 Umdrehungen/Minute zentrifugiert. Die so erhaltene gelbe, klare organische Phase zeigte bei Bestrahlung mit einer UV-Handlampe hellviolette Lumineszenz. Nach destillativer Abtrennung des 1-Decens verblieben 1,5 g einer blassgelben, hochviskosen Flüssigkeit.

### Beispiel 4

Auf 1 g Heißwandreaktor-Siliciumpulver wurde in einem mit Teflon ausgekleidetem Edelstahlautoklaven unter Kühlung mit flüssigem Stickstoff 5,2 g wasserfreier Fluorwasserstoff kondensiert und für 19,5 h bei 100°C gerührt. Anschließend wurde das Gemisch mit flüssigem Stickstoff gekühlt und 60 g Cyclohexen zugegeben. Das Gemisch wurde für 22 h Stunden bei 150°C gerührt. Nach destillativer Abtrennung des Fluorwasserstoffs wurde das Gemisch fünf Minuten bei 3500 Umdrehungen/Minute zentrifugiert. Die so erhaltene gelbe, klare organische Phase zeigte bei Bestrahlung mit einer UV-Handlampe blaue Lumineszenz. Nach destillativer Abtrennung des Cyclohexens verblieben 1,1 g einer tiefgelben, hochviskosen Flüssigkeit.

### Beispiel 5

Auf 1 g Mikrowellenreaktor-Siliciumpulver wurde in einem mit Teflon ausgekleidetem Edelstahlautoklaven unter Kühlung mit flüssigem Stickstoff 1 g wasserfreier Fluorwasserstoff kondensiert und für 16,5 h bei 100°C gerührt. Anschließend wurde das Gemisch mit flüssigem Stickstoff gekühlt und 80 g 1-Octen zugegeben. Das Gemisch wurde für 48 h Stunden bei 180°C gerührt. Nach destillativer Abtrennung des Fluorwasserstoffs wurde das Gemisch fünf Minuten bei 3500 Umdrehungen/Minute zentrifugiert. Die so erhaltene blassgelbe, klare organische Phase zeigte bei Bestrahlung mit einer UV-Handlampe hellblaue Lumineszenz. Nach destillativer Abtrennung des 1-Octens verblieben 1,1 g einer gelben, hochviskosen Flüssigkeit.

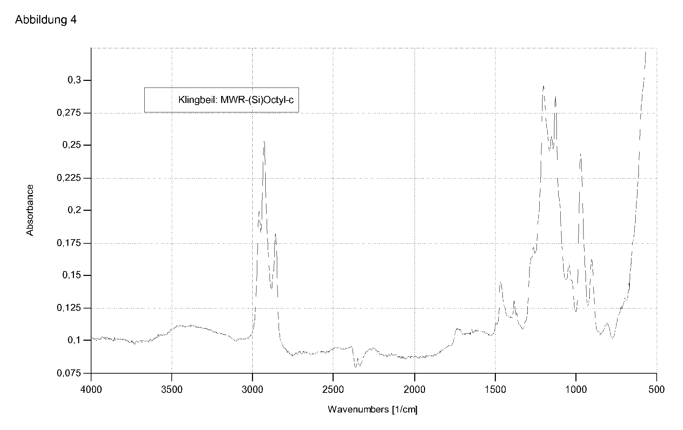

Abbildung 4 zeigt das IR-Spektrum der erhaltenen gelben, hochviskosen Flüssigkeit.

Zuordnung der wichtigsten und eindeutigsten Banden in den IR-Spektren in den Abbildungen 2 und 3:

| | | |
|---|---|---|
| 3000-2800 cm⁻¹: | v(CH) | |
| 2200-2000 cm⁻¹: | v(SiH) | kein Signal! |
| 1500-1300 cm⁻¹: | δ(CH₂) | |
| 1262 cm⁻¹: | v(SiC) | |
| 1199, 1150, 1126 cm⁻¹: | δ(Si-CH₂) | |

Die nach Zentrifugation erhaltene flüssige Phase wurde für TEM-Aufnahmen präpariert, also auf TEM-Netzchen aufgetropft und anschließend an Luft getrocknet.

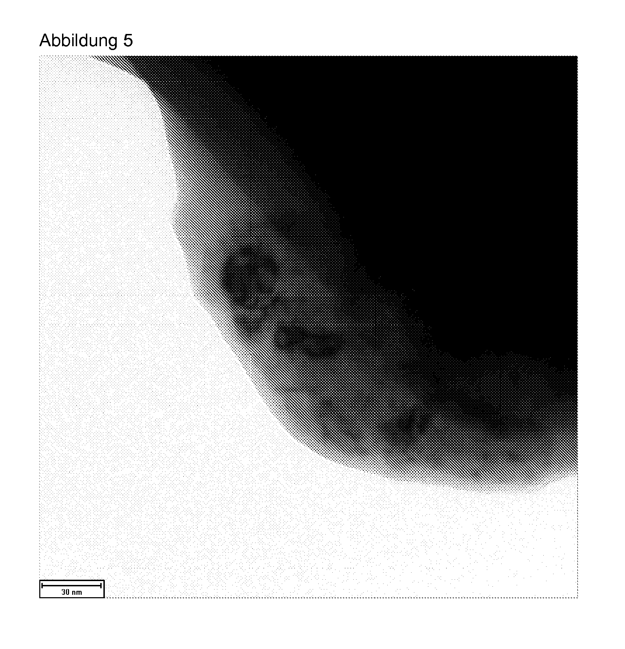

Abbildung 5 zeigt eine entsprechende TEM-Aufnahme. Man erkennt in den grauen Bereichen (getrocknete ölige Phase) dunklere Strukturen von rundlicher bis unregelmäßiger, zum Teil länglicher Form. Diese dunklen Strukturen werden von Agglomeraten modifizierter Siliciumpartikel gebildet. Der gezeigte Massstab ist 30 nm lang.

### Beispiel 6

Auf 0,5 g Mikrowellenreaktor-Siliciumpulver wurde in einem mit Teflon ausgekleidetem Edelstahlautoklaven unter Kühlung mit flüssigem Stickstoff 5,1 g wasserfreier Fluorwasserstoff kondensiert und für 19,5 h bei 100°C gerührt. Anschließend wurde das Gemisch mit flüssigem Stickstoff gekühlt und 60 g Cyclohexen zugegeben. Das Gemisch wurde für 18h Stunden bei 150°C gerührt. Nach destillativer Abtrennung des Fluorwasserstoffs wurde das Gemisch fünf Minuten bei 3500 Umdrehungen/Minute zentrifugiert. Die so erhaltene gelbe, klare organische Phase zeigte bei Bestrahlung mit einer UV-Handlampe rote Lumineszenz. Nach destillativer Abtrennung des Cyclohexens verblieben 1,6 g einer tiefgelben, hochviskosen Flüssigkeit.

## Patentansprüche

1. Verfahren zur Herstellung einer Zusammensetzung enthaltend lumineszierende modifizierte Siliciumpartikel, umfassend die Schritte:
a) Bereitstellen von nanoskaligen Siliciumpartikeln,
b) optional, Vorbehandlung der nanoskaligen Siliciumpartikel mit Sauerstoff,
c) Herstellen einer Reaktionsmischung durch Zugabe von zumindest Fluorwasserstoff mit einem Wassergehalt von unter 40 Gew.-% und mindestens einer hydrosilylierbaren Verbindung zu den nanoskaligen Siliciumpartikel, wobei die Zugabe der hydrosilylierbaren Verbindung
i) gleichzeitig mit der Zugabe des Fluorwasserstoffs erfolgt, und/oder
ii) nach der Zugabe des Fluorwasserstoffs erfolgt, wobei optional zwischen den beiden Zugabeschritten überschüssiger Fluorwasserstoff und/oder entstandene Fluorsilane zumindest zum Teil entfernt werden, und
d) optional, Aufkonzentrierung oder Isolierung der in Schritt c) erhaltenen lumineszierenden modifizierten Siliciumpartikel.

2. Verfahren nach Anspruch 1, wobei der Fluorwasserstoff einen Wassergehalt von unter 20 Gew.-%, bevorzugt von unter 10 Gew.-%, weiter bevorzugt von unter 5 Gew.-%, noch weiter bevorzugt von unter 1 Gew.-% aufweist, und am meisten bevorzugt wasserfrei ist.

3. Verfahren nach Anspruch 1 oder 2, wobei als nanoskalige Siliciumpartikel ein Siliciumpulver aus aggregierten kristallinen HWR- oder MWR-Siliciumpartikeln verwendet wird.

4. Verfahren nach Anspruch 3, wobei das Siliciumpulver aus aggregierten kristallinen HWR-Siliciumpartikeln eine BET-Oberfläche im Bereich zwischen 20 bis 150 m²/g, bevorzugt zwischen 40 und 120 m²/g, aufweist.

5. Verfahren nach Anspruch 3, wobei das Siliciumpulver aus aggregierten kristallinen MWR-Siliciumpartikeln eine BET-Oberfläche von mehr als 50 m²/g, bevorzugt im Bereich zwischen 100 bis 700 m²/g, aufweist.

6. Verfahren nach einem der vorherigen Ansprüche, wobei die Siliciumpartikel in Form einer Dispersion in einem Lösungsmittel, bevorzugt in einem Alkohol, einem Ether oder einem Keton, bereitgestellt werden.

7. Verfahren nach einem der vorherigen Ansprüche, wobei die hydrosilylierbare Verbindung ausgewählt wird aus der Gruppe, die Alkene und Alkine umfasst.

8. Verfahren nach Anspruch 7, wobei die hydrosilylierbare Verbindung ein einfach oder mehrfach ungesättigtes C₆-C₁₂-Alken oder -Alkin ist und vorzugsweise zumindest eine endständige Mehrfachbindung aufweist.

9. Verfahren nach Anspruch 8, wobei die hydrosilylierbare Verbindung ausgewählt wird aus der Gruppe, die 1-Octen, Cyclohexen, 1-Hexen, 1-Decen, 1-Undecen umfasst.

10. Verfahren nach einem der vorherigen Ansprüche, wobei die Vorbehandlung in Schritt b) mit Luft, Sauerstoff oder getrocknetem Sauerstoff erfolgt.

11. Verfahren nach einem der vorherigen Ansprüche, wobei die Hydrosilylierung in Schritt c) thermisch induziert wird, vorzugsweise durch Erwärmen der Reaktionsmischung auf eine Temperatur von über 100 °C, bevorzugter auf eine Temperatur im Bereich von 120 bis 240 °C, am meisten bevorzugt im Bereich von 140 bis 200 °C.

12. Verfahren nach einem der vorherigen Ansprüche, wobei die in Schritt c) oder d) erhaltene Zusammensetzung oder die isolierten lumineszierenden modifizierten Siliciumpartikel in einem organischen Lösungsmittel kolloidal gelöst werden, wobei das Lösungsmittel vorzugsweise ein unpolares aprotisches Lösungsmittel ist.

13. Lumineszierende modifizierte Siliciumpartikel oder Zusammensetzung enthaltend solche Partikel, vorzugsweise hergestellt nach einem der Verfahren 1 bis 12.

14. Verwendung lumineszierender modifizierter Siliciumpartikel oder einer Zusammensetzung enthaltend solche Partikel, vorzugsweise hergestellt nach einem der Verfahren 1 bis 12, in Leuchtdioden, Lumineszenzlampen, Lumineszenzfolien, Displays, als oder in Lumineszenzfarbstoffen, Biomarkern, Farbstoffen für die Fluoreszenzmikroskopie, in Feldeffekttransistoren und als Identifikationsmerkmal in der Dokumentensicherheit.
